# EUROPÄISCHE PATENTSCHRIFT

(11) **EP 1 402 655 B1**
(45) Veröffentlichungstag und Bekanntmachung des Hinweises auf die Patenterteilung: **06.09.2006**
(21) Anmeldenummer: 02742803.6
(22) Anmeldetag: 11.06.2002
(51) Int. Cl.: H04B 7/06, H04B 7/08

(54) **VERFAHREN ZUM BETREIBEN EINES MOBILFUNK-KOMMUNIKATIONSSYSTEMS UND STATIONEN DAFÜR**
METHOD FOR OPERATING A MOBILE RADIO COMMUNICATIONS SYSTEM AND STATIONS THEREFOR
PROCEDE POUR EXPLOITER UN SYSTEME DE RADIOCOMMUNICATION MOBILE ET STATIONS CORRESPONDANTES

(30) Priorität: 02.07.2001 DE 10131946
(43) Veröffentlichungstag der Anmeldung: 31.03.2004
(73) Patentinhaber: SIEMENS AKTIENGESELLSCHAFT, 80333 München (DE)
(72) Erfinder: LOBINGER, Andreas, 83714 Miesbach (DE); RAAF, Bernhard, 81475 München (DE); WIEDMANN, Ralf, 81369 München (DE); SEEGER, Alexander, 85622 Feldkirchen (DE)
(86) Internationale Anmeldenummer: PCT/DE2002/002131
(87) Internationale Veröffentlichungsnummer: WO 2003/005605

(56) Entgegenhaltungen:
- EP-A- 0 806 844
- DE-A- 10 032 426
- US-A- 5 634 199
- 3G TS 25.214 V3.2.0: "UMTS PHYSICAL LAYER PROCEDURES (FDD), CHAPTER 7:CLOSED LOOP MODE TRANSMIT DIVERSITY" März 2000 (2000-03) , ETSI , 3GPP STANDARD XP002220796 Seite 27 -Seite 34 Abbildung 2; Tabellen 8,9

## Beschreibung

Die vorliegende Erfindung betrifft ein Verfahren zum Betreiben eines Mobilfunk-Kommunikationssystems sowie eine Teilnehmerstation und eine Basisstation, die zur Durchführung des Verfahrens geeignet sind.

In einem Mobilfunk-Kommunikationssystem wie etwa dem UMTS-System werden zur Ausnutzung von räumlicher Diversität mehrere Antennen an einer Basisstation eingesetzt. Diese werden für die Datenübertragung auf dedizierten Kanälen an einzelne Teilnehmerstationen mit jeweils unterschiedlichen Gewichtungsfaktoren gewichtet. Die Gewichtungsfaktoren sind im allgemeinen komplexe Zahlen bestehend aus einer Betrags- und einer Phasenkomponente. Ein Satz von gleichzeitig für einen dedizierten Kanal verwendeten Gewichtungsfaktoren wird auch als Gewichtungsvektor bezeichnet. Durch die Gewichtung wird für jede Teilnehmerstation in einer Zelle eine Abstrahlungskeule in Richtung des Ortes der jeweiligen Mobilfunkstation erzeugt (Beamforming oder Strahlformung).

Um auf einem dedizierten Kanal übertragene Nutzdatensymbole korrekt decodieren zu können, benötigt eine Teilnehmerstation eine Kanalschätzung, die zumindest die auf dem Kanal auftretende Phasenverschiebung angibt. Diese Kanalschätzung wird herkömmlicherweise durchgeführt, indem auf dem dedizierten Kanal Pilotbits gesendet werden, die der Teilnehmerstation bekannt sind, so dass sie die Phasenverschiebung des Kanals durch Vergleich empfangener Symbolphasen der Pilotbits mit erwarteten Phasen herausfinden kann.

Eine erste bevorzugte Anwendung der Erfindung ist das Schätzen des dedizierten Kanals der Downlink-Übertragung von einer Basisstation an eine Teilnehmerstation in einem Mobilfunk-Kommunikationssystem mit Antennendiversität.

Die Kanalschätzung anhand der Pilotbits des dedizierten Kanals (im folgenden als auch dedizierte Pilotbits bezeichnet) ist herkömmlicherweise qualitativ schlecht und stark verrauscht, da die dedizierten Pilotbits wie der Rest des Kanals mit einer Leistung ausgestrahlt werden, die zwecks Minimierung von Interferenzen bei anderen Teilnehmerstationen, für die der dedizierte Kanal nicht bestimmt ist, so niedrig wie möglich gewählt wird.

Zur Kanalschätzung ist es insbesondere bei CDMA-Systemen auch bekannt, globale Pilotsignale von der Basisstation auszusenden, die wie die dedizierten Pilotbits vordefinierte Signale sind. Sie werden ungewichtet ausgestrahlt und sind daher in der gesamten von der Basisstation versorgten Mobilfunkzelle (bzw. dem versorgten Zellsektor im Falle einer sektorisierten Basisstation) empfangbar. Da diese globalen Pilotsignale eine für alle Mobilstationen im Bereich der Zelle nutzbringende Information enthalten, wird eine eventuelle Interferenz der globalen Pilotsignale mit den dedizierten Kanälen in Kauf genommen. Die globalen Pilotsignale werden daher mit einer höheren Leistung ausgestrahlt als die dedizierten Pilotbits und erlauben eine qualitativ bessere Schätzung. Allerdings ist eine Schätzung, die die Teilnehmerstation für einen globalen Kanal gewinnt, nicht ohne weiteres auf einen dedizierten Kanal übertragbar, da die relativen Phasen, mit denen globaler und dedizierter Kanal von den einzelnen Antennen der Basisstation ausgestrahlt werden, je nach verwendetem Gewichtungsvektor unterschiedlich sind. Wenn die Teilnehmerstation den verwendeten Gewichtungsvektor kennt, ist sie in der Lage, aus einer Schätzung des globalen Kanals eine Schätzung des dedizierten Kanals zu berechnen. Diese Kenntnis ist aber nur bei einem System mit sogenannter Closed-Loop-Strahlformung gegeben, bei dem die Teilnehmerstation den von der Basisstation zu verwendenden Gewichtungsvektor kennt, weil sie ihn selbst ausgewählt und der Basisstation vorgegeben hat. Auch dort fehlt jedoch der Teilnehmerstation diese Kenntnis, wenn infolge einer Übertragungsunterbrechung die Teilnehmerstation die globalen Pilotbits der Basisstation nicht empfangen oder den ausgewählten Gewichtungsvektor nicht übertragen kann, oder wenn bei der Initialisierung der Closed-Loop-Strahlformung die Teilnehmerstation noch keine Gelegenheit gehabt hat, der Basisstation einen Gewichtungsvektor vorzugeben. Bei Open-Loop-Systemen, bei denen die Basisstation den Gewichtungsvektor auswählt, ist die Berechnung generell nicht möglich.

Eine andere bevorzugte Anwendung der Erfindung ist die Steuerung der Strahlformung in einem Mobilfunk-Kommunikationssystem, bei eine Basisstation einen für die Downlink-Strahlformung verwendeten kurzfristigen Gewichtungsvektor aus einer Mehrzahl von langfristigen Gewichtungsvektoren anhand von von der Teilnehmerstation gelieferter kurzfristiger Rückkopplungsinformation auswählt oder linear kombiniert. Ein solches System ist z.B. in der am 4. Juli 2000 eingereichten Patentanmeldung der Anmelderin mit dem amtlichen Aktenzeichen DE 100 32 426.6 beschrieben.

Herkömmliche Systeme dieser Art sehen vor, dass die langfristigen Gewichtungsvektoren jeweils von den Teilnehmerstationen ermittelt und an die Basisstationen übertragen werden. Die Übertragungskapazität, die zur Übertragung sowohl der kurzfristigen Rückkopplungsinformation wie auch der langfristigen Gewichtungsvektoren zur Verfügung steht, ist auf insgesamt ein Bit pro Zeitschlitz des Uplink-Signals begrenzt. Um eine schnelle Anpassung der Strahlformung an schnelles Fading zu ermöglichen, ist eine häufige Übertragung der kurzfristigen Rückkopplungsinformation nötig; diese ist jedoch blockiert oder reagiert träger, wenn neue langfristige Gewichtungsvektoren an die Basisstation übertragen werden müssen.

Außerdem ist es in einem solchen System erforderlich, dass jede einzelne Teilnehmerstation des Systems in der Lage ist, die langfristigen Gewichtungsvektoren zu ermitteln, was die Komplexität der Teilnehmerstationen erhöht.

Aufgabe der Erfindung ist, ein Verfahren zum Betreiben eines Mobilfunk-Kommunikationssystems anzugeben, das die Voraussetzungen dafür schafft, dass zum einen der dedizierte Kanal der Downlink-Übertragung auch bei den oben genannten Sonderfällen im Rahmen der Closed-Loop-Strahlformung sowie bei der Open-Loop-Strahlformung mit im wesentlichen der gleichen Qualität geschätzt werden kann, mit der der globale Kanal schätzbar ist, ohne dass hierfür verstärkte Interferenz an anderen Teilnehmerstationen, etwa aufgrund erhöhter Sendeleistung oder dergleichen, in Kauf genommen werden muss, und/oder das eine gleichbleibend flinke Steuerung der Downlink-Strahlformung auch dann erlaubt, wenn die langfristigen Gewichtungsvektoren aktualisiert werden.

Die Aufgabe wird dadurch gelöst, dass bei dem erfindungsgemäßen Verfahren die Basisstation an die Teilnehmerstation eine Information überträgt, die zum Strahlformen des dedizierten Kanals verwendete Gewichtungsvektoren spezifiziert.

Wenn die Information den jeweils als nächsten von der Basisstation verwendeten Gewichtungsvektor spezifiziert, so ermöglicht dies der Teilnehmerstation im Rahmen der ersten Anwendung der Erfindung, eine erste Schätzung des dedizierten Kanals an der Teilnehmerstation aus einer Schätzung eines globalen Kanals anhand des spezifizierten Gewichtungsvektors zu berechnen.

Ergänzend hierzu kann eine zweite Schätzung in herkömmlicher Weise durch Messung am dedizierten Kanal gewonnen werden und eine abschließende Schätzung durch Mittelung oder eine sonstige rechnerische Verknüpfung der ersten und der zweiten Schätzung berechnet werden.

Die Festlegung des verwendeten Gewichtungsvektors kann an der Basisstation erfolgen, dieser Fall wird als Open-Loop Beamforming bezeichnet.

Zweckmäßigerweise überträgt die Basisstation die Information über den verwendeten Gewichtungsvektor in diskretisierter Form, im Falle eines Systems wie dem UMTS-System, bei dem Basisstationen mit zwei Antennen zum Einsatz kommen, z.B. in Form von Drei-Bit-Wörtern, von denen jeweils zwei Bits eine Phasendifferenz zwischen dem den zwei Antennen zugeordneten Gewichtungsfaktoren und ein Bit das Verhältnis ihrer Beträge angibt.

Um Übertragungsfehler zu vermeiden, überträgt die Basisstation die den Gewichtungsvektor spezifizierende Information zweckmäßigerweise mit einem Fehlerkorrekturcode codiert. Dies kann in einfacher Weise dadurch geschehen, dass die Information auf einer höheren Ebene des OSI-Schichtmodells als der Bit-Schicht übertragen wird.

Möglich ist auch, dass die Basisstation die den Gewichtungsvektor spezifizierende Information nicht selbst gewinnt, sondern vorab von der Teilnehmerstation eine Information empfängt, die den zu verwendenden Gewichtungsvektor spezifiziert und eine davon abgeleitete Information an die Teilnehmerstation rücküberträgt. Ein solches Szenario ist insbesondere in einem System mit sogenannter Closed-Loop-Strahlformung anwendbar.

In einem solchen Fall dient die Rückübertragung der Information von der Basisstation an die Teilnehmerstation in erster Linie der Bestätigung, dass die Basisstation die vorab von der Teilnehmerstation gesendete, den zu verwendenden Gewichtungsvektor spezifierende Information korrekt empfangen hat. Zu diesem Zweck kann es genügen, dass für die Rückübertragung der Information an die Teilnehmerstation eine gröbere Diskretisierung verwendet wird als für den Empfang von dieser. In anderen Fällen kann aber auch eine feinere Diskretisierung vorteilhaft sein, wie im folgenden noch ausgeführt werden wird.

Denkbar ist auch, dass die Teilnehmerstation an die Basisstation eine Information überträgt, die einen Gewichtungsvektor spezifiziert, der der Basisstation einen Empfang des dedizierten Kanals mit größtmöglicher Empfangsfeldstärke erlauben würde, dass aber die Basisstation nicht exakt den spezifizierten Gewichtungsvektor verwendet, sondern vorab eine Korrektur an diesem Gewichtungsvektor vornimmt, den so erhaltenen korrigierten Gewichtungsvektor zur Strahlformung verwendet und dass deshalb die von der Basisstation an die Teilnehmerstation übertragene Information auf diesen korrigierten Gewichtungsvektor bezogen ist. Eine solche Korrektur kann vorteilhafterweise insbesondere der Verringerung von Interferenzen an zweiten Teilnehmerstationen dienen, für die der dedizierte Kanal nicht bestimmt ist. Da die Basisstation auch die für die zweiten Teilnehmerstationen zu verwendenden Gewichtungsvektoren kennt, ist sie in der Lage, Korrekturen an dem Gewichtungsvektor in der Art vorzunehmen, dass die Empfangsfeldstärke eines dedizierten Kanals an einer zweiten Teilnehmerstation, für die er nicht bestimmt ist, gegenüber dem nicht korrigierten Fall deutlich reduziert ist und gleichzeitig an der Teilnehmerstation, für die der Kanal bestimmt ist, in wesentlich geringerem Umfang reduziert ist.

In einem Open-Loop-System legt die Basisstation den Gewichtungsvektor anhand einer Messung fest, die sie an einem von der Teilnehmerstation kommend empfangenen Uplink-Signal durchführt. Auch hier kann es zweckmäßig sein, den aus einer solchen Messung abgeleiten Gewichtungsvektor erst zu korrigieren und dann die auf den korrigierten Vektor bezogene Information an die Teilnehmerstation zu übertragen.

Einer anderen Ausgestaltung der Erfindung zufolge ist vorgesehen, die Kenntnis des Gewichtungsvektors an der Teilnehmerstation dadurch zu gewährleisten, dass die Teilnehmerstation selbst anhand von am Downlink-Signal durchgeführten Messungen den von der Basisstation zu verwendenden Gewichtungsvektor festlegt, an die Basisstation eine Information überträgt, die den von der Basisstation zu verwendenden Gewichtungsvektor spezifiziert, und dann den so festlegten Gewichtungsvektor zur Schätzung des dedizierten Kanals heranzieht, d.h. bei der Schätzung des dedizierten Kanals davon ausgeht, dass die Basisstation ihn tatsächlich mit dem festgelegten Gewichtungsvektor geformt hat. D.h. die Teilnehmerstation führt die Kanalschätzung unmittelbar anhand eines Gewichtungsvektors aus, den sie selbst auswählt und dann der Basisstation vorgibt. Eine Rückübertragung von den Gewichtungsvektor spezifizierender Information von der Basisstation an die Teilnehmerstation ist in einem solchen Fall grundsätzlich nicht notwendig, aber als Bestätigung des korrekten Empfangs durch die Basisstation möglich.

Allerdings kann vorgesehen werden, dass die Basisstation, wenn sie die den zu verwendenden Gewichtungsvektor spezifizierende Information von der Teilnehmerstation nicht empfängt, selbsttätig einen Gewichtungsvektor festlegt und eine diesen festgelegten Gewichtungsvektor spezifierende Information an die Teilnehmerstation überträgt. Eine solche Vorgehensweise ist insbesondere nützlich bei der Initialisierung der Strahlformung im Closed-Loop-Mode, wenn die Basisstation zwar den dedizierten Kanal gewichtet senden muss, aber von der Teilnehmerstation noch keine Information über den zu verwendenden Gewichtungsvektor erhalten hat, oder im sogenannten Compressed-Mode des UMTS-Systems, wenn das Uplink-Signal von der Teilnehmerstation zur Basisstation zeitweilig unterbrochen wird und die Basisstation aus diesem Grund keine den zu verwendenden Gewichtungsvektor spezifizierende Information von der Teilnehmerstation empfängt.

Bei der zweiten Anwendung der Erfindung kann es sich bei der von der Basisstation an die Teilnehmerstation übertragenen, einen Gewichtungsvektor spezifizierenden Information um die Spezifizierung eines (unter evtl. mehreren) von der Basisstation anhand des Uplink-Signals von der Teilnehmerstation ermittelten Gewichtungsvektors handeln. Im Gegensatz zur kurzfristigen Rückkopplungsinformation, in der Fading-Effekte eine große Rolle spielen und die deshalb in einem Frequenzduplexsystem an der Basisstation nur eingeschränkt ermittelt werden kann, können die Gewichtungsvektoren nämlich an der Basisstation gemessen werden, was den Vorteil mit sich bringt, dass Messeinrichtungen zu diesem Zweck nicht an jedem einzelnen Endgerät vorhanden sein müssen. Die Teilnehmerstationen können daher leicht, einfach und preiswert sein. An der Basisstation kann eine Messeinrichtung zum Ermitteln der langfristigen Gewichtungsvektoren mehrerer Teilnehmerstationen im Multiplex eingesetzt werden.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: ein Blockdiagramm eines Funk-Kommunikationsystems, in dem die vorliegende Erfindung anwendbar ist;
- Fig. 2: ein Blockdiagramm der Senderstufe einer Basisstation des Funk-Kommunikationsystems aus Fig. 1;
- Fig. 3: eine schematische Darstellung der von Basisstation und Teilnehmerstation ausgeführten Verfahrensschritte gemäß einer ersten Ausgestaltung der Erfindung; und
- Fig. 4: die Orientierung der Richtcharakteristiken zweier dedizierter Kanäle in dem Falle, dass die Basisstation eine Korrektur der Gewichtungsvektoren vornimmt;
- Fig. 5: eine Weiterentwicklung des mit Bezug auf Figs. 3 und 4 beschriebenen Verfahrens;
- Fig. 6: eine schematische Darstellung der Verfahrensschritte gemäß einer zweiten Ausgestaltung der Erfindung;
- Fig. 7: eine Weiterentwicklung des Verfahrens aus Fig. 6; und
- Fig. 8: eine schematische Darstellung von von Basisstation und Teilnehmerstation ausgeführten Verfahrensschritten gemäß einer dritten Ausgestaltung der Erfindung.

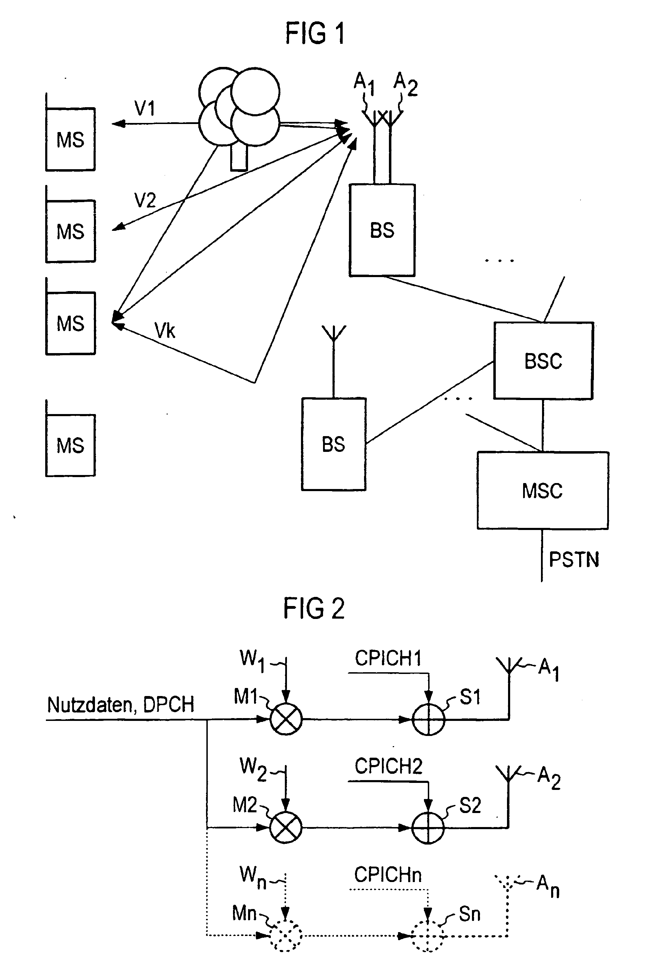

Fig. 1 zeigt die Struktur eines Funk-Kommunikationsystems, in dem die vorliegende Erfindung anwendbar ist. Es besteht aus einer Vielzahl von Mobilvermittlungsstellen MSC, die untereinander vernetzt sind bzw. Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtenverbindung zu Teilnehmerstationen MS aufbauen. Sie ist mit einer Antenneneinrichtung ausgerüstet, die mehrere Antennen, hier zwei Antennen A₁, A₂ umfasst. Diese Antennen A₁, A₂ werden von der Basisstation BS mit einem Downlink-Signal beaufschlagt, dass sich aus einer Vielzahl von Komponenten zusammensetzt. Eine Gruppe dieser Komponenten sind sogenannte dedizierte Kanäle, die jeweils für eine einzelne Teilnehmerstation MS bestimmte Symbole übertragen. Den dedizierten Kanal kann man sich unterteilt vorstellen in einen Nutzdatenkanal, auf dem die für die zugeordnete Teilnehmerstation bestimmten Nutzdaten übertragen werden, und einen Pilot-Bit-Kanal (Dedicated Pilot Channel DPCH im UMTS-System), auf dem eine Folge von der Teilnehmerstation MS bekannten Pilot-Bits übertragen wird.

Wie Fig. 2 zeigt, werden die Symbole des Nutzdaten- und des dedizierten Pilot-Bit-Kanals DPCH in der Senderstufe der Basisstation jeweils in Multiplizierern M1, M2 mit Koeffizienten w₁, w₂ eines Gewichtungsvektors W multipliziert; auf diese Weise wird den von den Antennen A₁, A₂ ausgestrahlten Signalen eine Phasenverschiebung und ein Amplitudenverhältnis aufgeprägt, die zu einer gerichteten Ausbreitung des dedizierten Kanals auf dem Funkweg führt.

Das Ausgangssignal der Multiplizierer M1, M2 durchläuft jeweils einen Addierer S1, S2, über den Pilot-Bit-Folgen CPICH1, CPICH2 des globalen Pilot-Bit-Kanals CPICH den Antennen A₁, A₂ zugeführt werden. Die zeitgleich ausgestrahlten Pilot-Bit-Folgen CPICH1, CPICH2 sind zueinander orthogonal und breiten sich in der Funkzelle ungerichtet aus. Da sie für alle Teilnehmerstationen in der Funkzelle empfangbar sein sollen, werden sie im allgemeinen mit einer höheren Leistung ausgestrahlt als der dedizierte Kanal.

Selbstverständlich kann das Senderteil, wie in der Fig. 2 gestrichelt dargestellt, auch mehr als zwei Antennen enthalten, die mit jeweils unterschiedlichen globalen Pilot-Bit-Folgen und mit einem gewichteten Downlink-Signal versorgt werden.

Die Orthogonalität der globalen Pilot-Bit-Folgen erlaubt es den Teilnehmerstationen in an sich bekannter Weise, die Anteile der verschiedenen Pilot-Bit-Folgen CPICH1, CPICH2 in einem Empfangssignal zu separieren und für jede dieser Folgen getrennt eine Kanalschätzung durchzuführen. Die Schätzung gibt Aufschluss über Dämpfung und Phasenverschiebung auf dem Übertragungskanal von der Antenne A₁ bzw. A₂ zur Teilnehmerstation MS. Aufgrund der relativ hohen Sendeleistung des Pilot-Bit-Kanals CPICH ist diese Kanalschätzung mit guter Genauigkeit möglich.

Der Einfachheit wird in dieser Beschreibung meist von 2 Antennen auf Seiten der Basisstation ausgegangen. Die Erfindung ist jedoch in gleicher Weise anwendbar, wenn mehr als 2 Antennen eingesetzt werden, auch wenn bei den einzelnen beschriebenen Varianten nicht jeweils explizit darauf hingewiesen wird. Im folgenden wird auch ausgeführt werden, dass manche Varianten des erfindungsgemäßen Verfahrens bei mehreren Antennen effizienter durchgeführt werden können als bei wenigen Antennen.

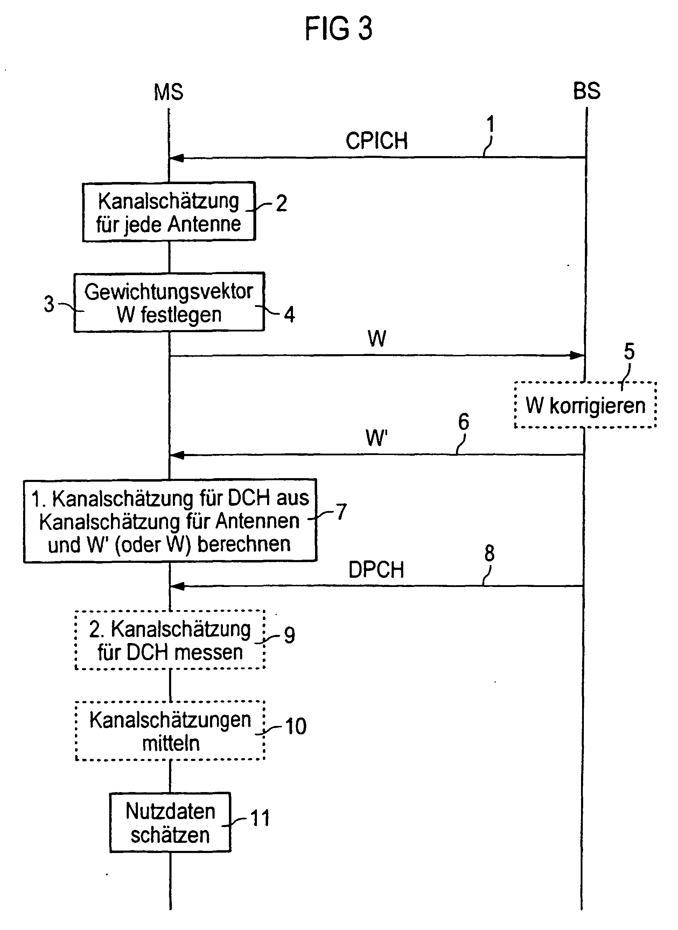

Fig. 3 veranschaulicht den Ablauf des erfindungsgemäßen Verfahrens in einem Mobilfunk-Kommunikationssystem mit Downlinkbasierter Strahlformung. Downlink-basierte Strahlformung bedeutet, dass jeweils die Teilnehmerstation MS anhand von periodisch am Downlink-Signal durchgeführten Messungen einen Gewichtungsvektor W festlegt, der, wenn er von der Basisstation verwendet würde, einen Empfang des Downlink-Signals mit maximaler Empfangsleistung ermöglichen würde, und Rückkopplungsinformation an die Basisstation überträgt, die diesen festgelegten Gewichtungsvektor W spezifiziert.

Diese Verfahrensschritte werden durch die Schritte 1 bis 4 des Diagramms der Fig. 3 dargestellt. In Schritt 1 sendet die Basisstation die globalen Pilot-Signale CPICH an alle Teilnehmerstationen MS in ihrer Funkzelle. Da die gemeinsamen Pilot-Signale für jede Antenne A₁, A₂ der Basisstation unterschiedlich sind, ist die Teilnehmerstation MS in der Lage, die empfangenen Pilot-Signale in die Beiträge CPICH1, CPICH2 der zwei Antennen A₁, A₂ zu zerlegen und eine Kanalschätzung für jede Antenne einzeln durchzuführen. Anhand dieser Kanalschätzungen ermittelt sie in Schritt 3 eine optimale Phasendifferenz, die, wenn sie zwischen den von den Antennen A₁, A₂ abgestrahlten Signalen bestünde, zu deren gleichphasiger Überlagerung an der Teilnehmerstation MS führen würde, und eventuell auch ein gewünschtes Amplitudenverhältnis.

Im UMTS-Standard sind zwei Betriebszustände mit Downlinkbasierter Strahlformung definiert, ein als Closed-Loop-Mode 1 bezeichneter, in dem lediglich die Phase der von den zwei Antennen ausgestrahlten Signale mit einer Auflösung von π/2 festgelegt wird, und den sogenannten Closed-Loop-Mode 2, in dem die relative Phase mit einer Auflösung von π/4 festgelegt wird und zwei verschiedene Amplitudenverhältnisse der Antennensignale wählbar sind.

In Schritt 4 wird die Information über den von der Teilnehmerstation MS festgelegten Gewichtungsvektor an die Basisstation BS übertragen. Diese Information umfasst im Closed-Loop-Mode 1 zwei Bits, im Closed-Loop-Mode 2 vier Bits und wird dementsprechend auf zwei bzw. vier Zeitschlitze verteilt übertragen. Die Phasendifferenz und das Amplitudenverhältnis werden von der Teilnehmerstation MS, sofern sie nicht von vornherein mit entsprechender Auflösung gemessen werden, auf mit der besagten Information darstellbare Werte gerundet.

Die Basisstation BS verfügt so über die Kenntnis aller Gewichtungsvektoren W, die von den verschiedenen von ihr versorgten Teilnehmerstationen MS gewünscht werden. Es kann zweckmäßig sein, nicht für jede Teilnehmerstation MS exakt den von dieser festgelegten und durch die in Schritt 4 übertragene Information spezifizierten Gewichtungsvektor W zu verwenden, sondern vorab in Schritt 5 Korrekturen an den Gewichtungsvektoren vorzunehmen. Auf die Voraussetzungen und die Durchführung dieses fakultativen Schrittes wird an späterer Stelle genauer eingegangen.

In Schritt 6 überträgt die Basisstation an jede Teilnehmerstation eine Information, die den Gewichtungsvektor W' definiert, den die Basisstation demnächst zum Gewichten des dedizierten Downlink-Kanals für diese Teilnehmerstation MS verwenden wird. Wenn der Schritt 5 nicht durchgeführt wird, ist W'=W, und der Schritt 6 hat lediglich die Funktion, der Teilnehmerstation MS zu bestätigen, dass die Basisstation die in Schritt 4 übertragene Information korrekt empfangen hat.

In Kenntnis des Gewichtungsvektors W', den die Basisstation verwenden wird, berechnet die Teilnehmerstation MS in Schritt 7 eine erste Kanalschätzung für den dedizierten Kanal aus den in Schritt 2 für jede Antenne erhaltenen Phasenverschiebungs- und Dämpfungswerten und dem Gewichtungsvektor W'. Anhand des in Schritt 8 mit dem Gewichtungsvektor W' gewichtet ausgestrahlten dedizierten Pilot-Bit-Kanals DPCH führt die Teilnehmerstation MS in Schritt 9 eine zweite Kanalschätzung für den dedizierten Kanal aus. Da diese Kanalschätzung Stand der Technik ist, braucht ihre Durchführung an dieser Stelle nicht im Detail beschrieben zu werden.

Eine definitive Kanalschätzung wird in Schritt 10 durch Mitteln der in den Schritten 7 und 9 erhaltenen Schätzergebnisse erhalten. Diese Kanalschätzung wird in Schritt 11 zum Schätzen der auf dem dedizierten Kanal übertragenen Nutzdaten eingesetzt. Zweckmäßigerweise werden dabei die beiden Kanalschätzungen gemäß ihrer Qualität gemittelt, was im allgemeinen dazu führt, dass die auf dem common pilot basierende Kanalschätzung stärker gewichtet wird als die auf dem dedizierten Pilot-Bit-Kanal DPCH beruhende Kanalschätzung.

Das Verfahren lässt sich vereinfachen, indem die Schritte 9 und 10 weggelassen werden; in diesem Falle erfolgt die Schätzung der Nutzdaten allein auf Grundlage der in Schritt 7 erhaltenen Kanalschätzung.

Eine weitere Abwandlung des Verfahrens betrifft den in Schritt 7 für die Kanalberechnung herangezogenen Gewichtungsvektor. Dieser Gewichtungsvektor kann selbstverständlich auch der ursprünglich von der Teilnehmerstation festgelegte Gewichtungsvektor W sein, Abweichungen zum oben beschriebenen Verfahren können sich lediglich dann ergeben, wenn bei der Informationsübertragung in den Schritten 4 oder 6 ein Fehler aufgetreten ist, so dass der mit der in Schritt 6 an die Teilnehmerstation MS übertragenen Information spezifizierte Vektor W' nicht mehr der gleiche wie der Gewichtungsvektor W ist.

Während im UMTS-System die für die Übertragung der Rückkopplungsinformation in Schritt 4 zur Verfügung stehende Bandbreite mit einem Bit pro Zeitschlitz äußerst begrenzt ist, kann für die Übertragung in Gegenrichtung in Schritt 6 eine größere Bandbreite bereitgestellt werden. Deshalb ist nach einer Weiterentwicklung des Verfahrens vorgesehen, die den Vektor W' spezifizierende Information in Schritt 6 mit einem Fehlerkorrekturcode codiert zu übertragen, der der Teilnehmerstation MS die Erkennung und eventuell Behebung von Übertragungsfehlern erlaubt. Dies ist beispielsweise auf einfache Weise realisierbar, indem die Information in Schritt 6 auf einer höheren Ebene des OSI-Schichtmodells als der Bit-Schicht übertragen wird.

Um die zum Übertragen der Information in Schritt 6 benötigte Bandbreite gering zu halten, ist nach einer anderen Weiterentwicklung vorgesehen, dass diese Information den Gewichtungsvektor mit einer geringeren Auflösung spezifiziert als die von der Teilnehmerstation in Schritt 4 gelieferte Rückkopplungsinformation. D.h. die Menge der Gewichtungsvektoren W', die mit der in Schritt 6 übertragenen Information spezifizierbar ist, ist eine Teilmenge der möglichen Gewichtungsvektoren W, die die Teilnehmerstation festlegen kann. Dies ist besonders in dem Falle zweckmäßig, wo die Teilnehmerstation die erste Kanalschätzung anhand des von ihr ursprünglich festgelegten Gewichtungsvektors W berechnet und die Übertragung der den Vektor W' spezifierenden Information lediglich die Bedeutung einer Empfangsbestätigung hat.

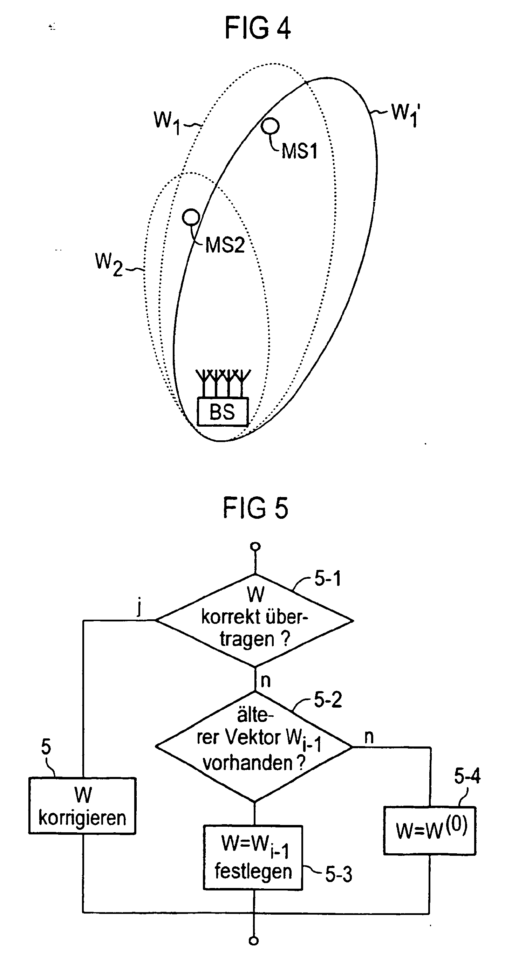

Die Korrektur des von der Teilnehmerstation MS festgelegten Gewichtungsvektors W an der Basisstation BS in Schritt 5 wird nun anhand der Fig. 4 erläutert. Diese zeigt schematisch die geographischen Positionen zweier Teilnehmerstationen MS1, MS2 in Bezug auf eine mit beiden kommunizierende Basisstation BS. Jede dieser Teilnehmerstationen MS1, MS2 legt den Gewichtungsvektor W1 bzw. W2, den die Basisstation beim Senden des dedizierten Kanals verwenden soll, so fest, dass eine Richtcharakteristik resultiert, die mit maximaler Intensität in Richtung der betreffenden Teilnehmerstation MS1 bzw. MS2 strahlt. Diese Richtcharakteristiken sind in der Figur als gestrichelte Ellipsen dargestellt und der Einfachheit halber mit den gleichen Symbolen W1, W2 wie die ihnen entsprechenden Gewichtungsvektoren bezeichnet. Entsprechend einem unterschiedlichen Abstand der Teilnehmerstationen MS1, MS2 von der Basisstation BS benötigen beide eine unterschiedliche Sendeleistung im Downlink, was durch die unterschiedlliche Größe der Ellipsen W1, W2 symbolisch dargestellt ist. Da die zwei Teilnehmerstationen MS1, MS2 mit der Basisstation nur einen kleinen Winkel aufspannen, erreicht der für die entferntere Teilnehmerstation MS1 bestimmte dedizierte Kanal, wenn er mit W1 gewichtet ausgestrahlt wird, die nähere Teilnehmerstation MS2 mit einer höheren Feldstärke als deren eigener dedizierter Kanal, dargestellt durch die Ellipse W2. Dies kann zu einem erheblichen Störeinfluss des dedizierten Kanals der Teilnehmerstation MS1 auf den Empfang der Station MS2 führen. Um dies zu vermeiden, korrigiert die Basisstation BS den Gewichtungsvektor W1 zu W1', der einer geringfügig gegen W1 verdrehten Strahlcharakteristik entspricht. Die daraus resultierende Verringerung der Empfangsfeldstärke an der Teilnehmerstation MS1 ist relativ gering; die Verringerung der Empfangsfeldstärke des für MS1 bestimmten dedizierten Kanals an der Station MS2 ist dem gegenüber wesentlich größer. Erst durch die Korrektur ist es möglich, die Empfangsfeldstärke des dedizierten Kanals von MS1 an der Station MS2 kleiner zu machen als die ihres eigenen dedizierten Kanals.

Die genaue Art der Korrektur kann auf verschiedene Art und Weise durchgeführt werden und auch verschiedene Optimierungskriterien zum Ziel haben. Beispielsweise kann das am Ort einzelner Mobilstationen empfangene Signal Rausch Verhältnis optimiert werden, oder ein ggf. gewichtetes mittleres Signal-Rausch-Verhältnis aller Mobilstationen. Im Extremfall können auch Mobilstationen anderer Zellen einbezogen werden, für die durch eine Strahlformung der Signale der gegebenen Zelle natürlich nur die Interferenz minimiert werden kann. Falls die Anzahl der Mobilstationen relativ klein ist, kann sogar erreicht werden, dass Signale, die für eine bestimmte Mobilstation bestimmt sind so abgestrahlt werden, dass am Ort der anderen Mobilstationen gar keine Interferenz auftritt (sog. Nulling). Ein solches Verfahren führt dabei i.W. zu nicht unerheblichen Korrekturen des Gewichtungsvektors. Weitere Korrekturalgorithmen werden hier nicht weiter beschrieben, sie sind aber ebenfalls im Rahmen der Erfindung anwendbar.

Der erziehlbare Strahlformungsgewinn durch konstruktive Überlagerung der Signale für die Mobilfunkstation, für die ein gewisser dedizierter Kanal bestimmt ist, ist im Bereich des Maximums relativ unempfindlich gegenüber kleinen Veränderungen des Gewichtsvektors, so dass, wie bereits beschrieben, die Gewichtsvektoren für eine solche Optimierung relativ grob diskretisiert werden können, genauer gesagt die einen solchen Gewichtungsvektor spezifizierende Information in Schritt 4 mit einer eher groben Diskretisierung übertragen werden kann. Dies gilt hingegen nicht für die Unterdrückung der Signale für andere Mobilfunkstationen, insbesondere wenn die Interferenz komplett unterdrückt werden soll. Der Grund liegt darin, dass eine typische Funktion im Bereich des Maximums relativ gesehen recht konstant ist während sie im Bereich einer Nullstelle sehr starke relative Änderungen zeigt. Daher kann es in dem Fall, dass eine Korrektur der Gewichtsvektoren vorgenommen wird, vorteilhaft sein, für die Übertragung der die Gewichtungsvektoren spezifizierenden Information an die Mobilfunkstation (Schritt 6) eine feinere Diskretisierung, insbesondere ggf. eine feinere Diskretisierung als sie bei der Übertragung der Information von der Mobilfunkstation zur Basisstation verwendet wird, anzuwenden.

Es ist leicht einzusehen, dass die Bedeutung einer solchen Korrektur um so größer ist, je schmaler die Abstrahlcharakteristiken der Basisstation sind, d.h. je größer die Zahl der Antennen an einer Basisstation ist, die zur Strahlformung eingesetzt werden können. Des weiteren lässt sich eine Interferenzunterdrückung für andere Mobilstationen ebenfalls mit zunehmender Antennenzahl effektiver durchführen.

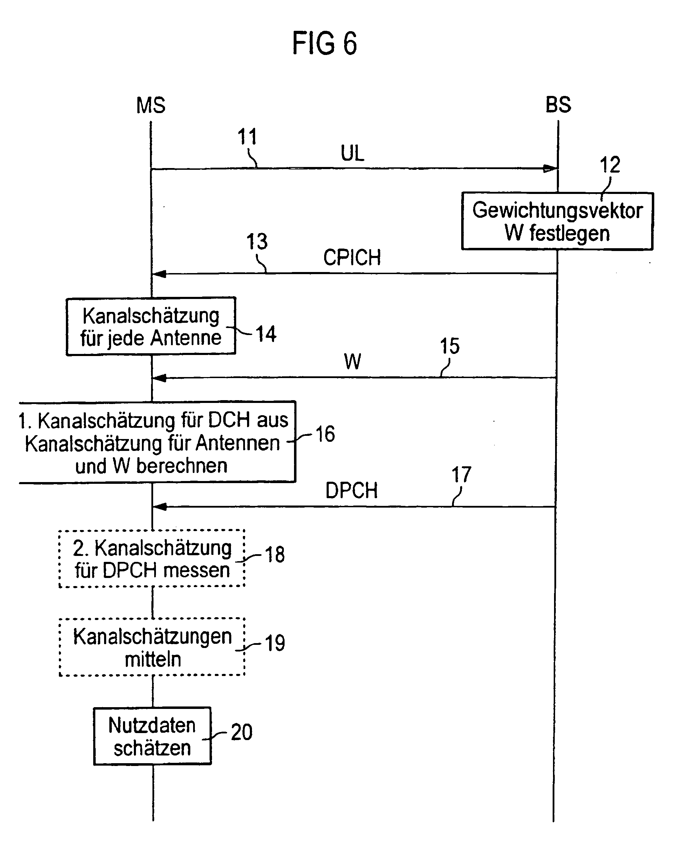

Einer Weiterbildung zufolge ist wie in Fig. 5 gezeigt dem Korrekturschritt 5 eine Überprüfung 5-1 vorgeschaltet, ob die Information in Schritt 4 korrekt empfangen wurde. Nur wenn dies der Fall ist, wird der durch sie spezifizierte Gewichtungsvektor korrigiert (Schritt 5). Anderenfalls prüft die Basisstation BS, ob aus einem früheren Zeitschlitz des dedizierten Kanals ein älterer Gewichtungsvektor Wᵢ₋₁ an der Basisstation BS gespeichert ist. Wenn ja, so wird dieser Vektor Wᵢ₋₁ erneut als Gewichtungsvektor verwendet (Schritt 5-3). Wenn die Strahlformung noch nicht korrekt initialisiert ist und ein Vektor Wᵢ₋₁ nicht existiert, wendet die Basisstation einen Default-Gewichtungsvektor W⁽⁰⁾ an (Schritt 5-4).

Fig. 6 zeigt in einer analogen Darstellung zu Fig. 3 die Anwendung der vorliegenden Erfindung auf ein Mobilfunk-Kommunikationssystem mit Uplink-basierter Strahlformung. Uplink-basierte Strahlformung beruht darin, dass anhand eines von einer Teilnehmerstation MS ausgestrahlten Uplink-Signals (Schritt 11) die Basisstation BS einen Gewichtungsvektor W festlegt (Schritt 12).

Ein Beispiel für ein solches System ist das UMTS-System im FDD-Modus. Die Festlegung des Gewichtungsvektors W erfolgt hier anhand von für jede Antenne einzeln durchgeführten Kanalschätzungen des Funkkanals von der Teilnehmerstation MS zu der betreffenden Antenne. Da sich im FDD-Modus die Frequenzen von Uplink und Downlink unterscheiden, ist hier eine Umrechnung der für den Uplink-gemessenen Phasenverschiebungen in solche des Downlinks erforderlich, bevor am Uplink gewonnene Schätzergebnisse für die Strahlformung des Downlink genutzt werden. Nur wenn Uplink- und Downlink-Signale gleiche Frequenzen benutzen, etwa in einem Zeitduplexmodus (TDD), ist eine für den Uplink-Kanal gewonnene Schätzung identisch auf den Downlink-Kanal übertragbar.

Die Schritte 13 des Ausstrahlens des globalen Pilot-Bit-Kanals CPICH durch die Basisstation BS und des Kanalschätzens 14 für jede Antenne A₁, A₂ der Basisstation durch die Teilnehmerstation MS sind mit den Schritten 1, 2 aus Fig. 3 identisch.

Die Festlegung des Gewichtungsvektors W an der Basisstation BS kann allein anhand der Uplink-Kanalschätzung derjenigen Teilnehmerstation MS erfolgen, für die der Gewichtungsvektor W bestimmt ist, es besteht aber auch die Möglichkeit, dass die Basisstation wie mit Bezug auf Fig. 4 beschrieben in Kenntnis der für andere Teilnehmerstationen zu verwendenden Gewichtungsvektoren eine Korrektur des Gewichtungsvektors W durchführt.

Eine Information, die den auf diese Weise festgelegten Gewichtungsvektor W spezifiziert, wird in Schritt 15 an die Teilnehmerstation MS übertragen. Diese führt in gleicher Weise wie oben für Schritt 7 beschrieben eine erste Kanalschätzung für den dedizierten Kanal aus, indem sie sie aus den in Schritt 14 erhaltenen globalen Kanalschätzungen und dem spezifizierten Gewichtungsvektor W berechnet. Die darauffolgenden Schritte des Ausstrahlens 17 des dedizierten Pilot-Bit-Kanals DPCH, der zweiten Kanalschätzung 18 anhand des Kanals DPCH, des Mittelns 19 und des Schätzens 20 der Nutzdaten sind die gleichen wie oben mit Bezug auf Fig. 3 beschrieben.

Die Schritte 18, 19 können wie die Schritte 9, 10 des Verfahrens von Fig. 3 auch entfallen, in diesem Fall erfolgt die Nutzdatenschätzung in Schritt 20 ausschließlich anhand der ersten Kanalschätzung von Schritt 16.

Im Compressed Mode des UMTS-Systems kann es zu zeitweiligen Unterbrechungen des Uplink-Signals kommen, so dass die Basisstation in einzelnen Zeitschlitzen nicht in der Lage ist, den Gewichtungsvektor wie oben mit Bezug auf Schritt 12 beschrieben, festzulegen.

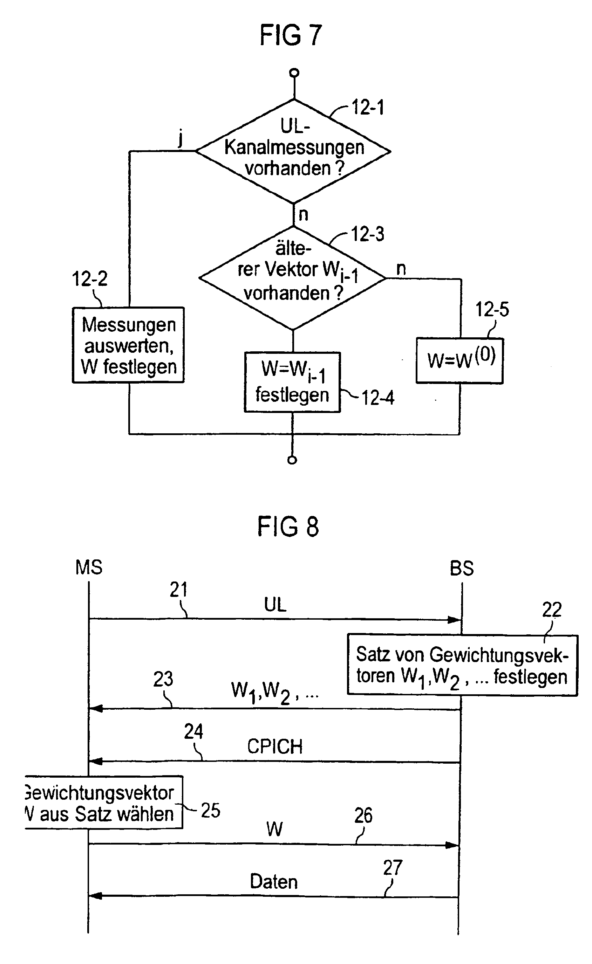

Fig. 7 zeigt eine Weiterentwicklung des Schritts 12, die dem Rechnung trägt. Hier überprüft die Basisstation in Schritt 12-1 zunächst, ob Messungen des Uplink-Kanals durchgeführt werden konnten. Nur wenn dies der Fall ist, wird W in Schritt 12-2 anhand dieser Messungen festgelegt. Andernfalls wird in Schritt 12-3 geprüft, ob ein älterer, in einem vorhergehenden Downlink-Zeitschlitz verwendeter Gewichtungsvektor Wᵢ₋₁ bekannt ist. Wenn ja, wird W=Wᵢ₋₁ festgelegt, andernfalls W=W⁽⁰⁾, wobei W⁽⁰⁾ ein vorgegebener Default-Vektor ist.

Die zweite bevorzugte Anwendung der Erfindung wird nun beschrieben. Dazu wird ein Mobilfunk-Kommunikationssystem mit einer Basisstation BS, die eine Antennenanordnung mit mehreren Antennen aufweist, und Teilnehmerstationen MS, wie mit Bezug auf Fig. 1 beschrieben, betrachtet.

Die Basisstation BS empfängt fortlaufend Uplink-Bursts von jeder Teilnehmerstation MS, mit der sie kommuniziert. Diese Bursts erreichen die Basisstation BS meist über mehrere Ausbreitungswege V1, V2, Vk, wobei die einzelnen Ausbreitungswege einer statistisch schwankenden Dämpfung (schnelles Fading) ausgesetzt sind. Auf den gleichen Ausbreitungswegen V1, V2, Vk in entgegengesetzter Richtung erreicht ein Downlink-Signal von der Basisstation BS die Teilnehmerstation MS. Diesen Ausbreitungswegen entsprechen jeweils Gewichtungsvektoren, die von der Basisstation BS beim Senden an eine Teilnehmerstation MS oder beim Empfang von dieser eingesetzt werden können, um bevorzugt in Richtung dieses Ausbreitungsweges auszustrahlen oder von dort zu empfangen. Dabei kann jedem einzelnen Ausbreitungsweg ein Gewichtungsvektor zugeordnet sein; es kann aber auch ein Gewichtungsvektor einer Ausbreitungsmode entsprechen, wobei unter einer Ausbreitungsmode jeweils eine Gesamtheit von Ausbreitungswegen verstanden wird, die ein gemeinsames, korreliertes Fading-Verhalten aufweisen, und das Fading-Verhalten verschiedener Ausbreitungsmodi möglichst unkorreliert ist.

Die Basisstation BS ist, z.B. durch Anwendung des in Patentanmeldung mit dem amtlichen Aktenzeichen 100 32 426.6 beschriebenen Verfahrens in der Lage, durch Messungen an den Uplink-Bursts solche Gewichtungsvektoren für den Uplink zu bestimmen. Diese Gewichtungsvektoren ändern sich nur langsam, wenn sich die Teilnehmerstation relativ zur Basisstation bewegt; sie werden daher auch als langfristige Gewichtungsvektoren bezeichnet. Ein solcher Satz von Eigenvektoren kann beispielsweise durch eine Eigenwertanalyse der Kovarianzmatrix errechnet werden, wobei die Kovarianzmatrix die gemittelte Korrelation der Signale, welche über unterschiedlichen Antennen empfangen werden, enthält.

Wenn die Frequenzen für Uplink und Downlink gleich sind, so stellen die so erhaltenen Gewichtungsvektoren auch geeignete Gewichtungsvektoren für den Downlink dar; sind die Frequenzen unterschiedlich, so können langfristige Gewichtungsvektoren für den Downlink aus denen für den Uplink auf einfache Weise berechnet werden, wenn dabei die unterschiedlichen Frequenzen in Up-und Downlink berücksichtigt werden. Im Gegensatz zum schnellen Fading ist das aber nur dann relevant, wenn die Abstände der Antennen relativ groß sind, wenn nämlich der Abstand zwischen den Antennen, ausgedrückt als Vielfaches der Wellenlänge bei der Uplink- oder Downlink-Frequenz signifikant unterschiedlich ist. Häufig, wenn die Differenz zwischen diesen beiden Ausdrücken klein ist, wird es also nicht nötig sein, eine solche Korrektur durchzuführen. Ansonsten kann die Korrektur z.B. durchgeführt werden, indem man verlangt, dass beiden Gewichtungsvektoren jeweils die gleiche bevorzugte Ausbreitungsrichtung oder ein möglichst ähnliches Abstrahl-Muster in Bezug auf die Basisstation entsprechen soll Die Basisstation BS überträgt von Zeit zu Zeit, z. B. in einem Rhythmus von mehreren Minuten oder nach Bedarf, wenn sich die langfristigen Gewichtungsvektoren geändert haben, Information an die mit ihr kommunizierenden Teilnehmerstationen MS, die für jede Teilnehmerstation einen Satz von langfristigen Downlink-Gewichtungsvektoren spezifiziert, den die Basisstation BS für die betreffende Teilnehmerstation MS gemessen bzw. berechnet hat.

Die Teilnehmerstationen speichern jeweils den für sie bestimmten Satz und liefern eine kurzfristige Rückkopplungsinformation an die Basisstation zurück, die einen Gewichtungsvektor aus dem Satz oder eine Linearkombination von Gewichtungsvektoren des Satzes spezifiziert, der unter Berücksichtigung der aktuellen Fading-Situation an der Teilnehmerstation dieser den besten Empfang des Downlink-Signals ermöglicht. Der so spezifizierte Vektor wird dann von der Basisstation BS so lange für die Strahlformung des Downlink-Signals eingesetzt, bis die Teilnehmerstation MS eine aktualisierte Rückkopplungsinformation liefert.

Die Teilnehmerstationen können einen einfachen Aufbau haben, denn sie müssen lediglich in der Lage sein, unter den gespeicherten Gewichtungsvektoren den zu einem gegebenen Zeitpunkt bestgeeigneten (oder die bestgeeignete Linearkombination) auszuwählen, nicht aber, die Gewichtungsvektoren selbst zu berechnen.

Fig. 8 veranschaulicht den Austausch von Meldungen zwischen Basisstation BS und Teilnehmerstation MS im Rahmen der zweiten Anwendung der Erfindung. Die Basisstation BS legt hier anhand eines von der Teilnehmerstation MS gesendeten Uplink-Signals 21 einen Satz von Gewichtungsvektoren W₁, W₂, ..., fest, die jeweils einzelnen Übertragungswegen oder Übertragungsmodem von der Basisstation BS zur Teilnehmerstation MS entsprechen. Dieser Satz von Gewichtungsvektoren wird in Schritt 23 an die Teilnehmerstation MS übertragen und dort gespeichert. Anhand des periodisch von der Basisstation BS ausgestrahlten Pilot-Bit-Kanals CPICH 24 wählt die Teilnehmerstation MS in Schritt 25 jeweils denjenigen Gewichtungsvektor W aus dem Satz der Gewichtungsvektoren oder einer Linearkombination von Gewichtungsvektoren aus diesem Satz aus, die ihr den bestmöglichen Empfang des dedizierten Kanals ermöglichen. Eine Bezeichnung dieses Gewichtungsvektors W oder dieser Linearkombination wird in Schritt 26 an die Basisstation zurück übertragen, die daraufhin den dedizierten Kanal in Schritt 27 mit dem bezeichneten Gewichtungsvektor gewichtet ausstrahlt.

Bei dieser Ausgestaltung benötigt die Teilnehmerstation MS keine Einrichtungen zum Berechnen des Satzes von Gewichtungsvektoren aus dem Downlink-Signal. Eine entsprechende Einrichtung zum Berechnen des Satzes aus dem Uplink-Signal, die an der Basisstation vorgesehen ist, kann jeweils in zeitlicher Folge eine Mehrzahl von Teilnehmerstationen mit geeigneten Gewichtungsvektoren versorgen. Auf diese Weise verringert sich der Schaltungsaufwand für das Mobil-Kommunikationssystem im Vergleich zu einem System, wo die Sätze von Gewichtungsvektoren von den Teilnehmerstationen festgelegt wird; die Teilnehmerstationen sind weniger aufwendig in der Fertigung und können preiswerter abgegeben werden.

Ein weiterer Vorteil ist, dass die geringe Bandbreite, die zur Übertragung der Rückkopplungsinformation für die Strahlformung an die Basisstation zur Verfügung steht (nur ein Bit pro Zeitschlitz beim UMTS-System), ausschließlich und ständig für die Übertragung kurzfristiger Rückkopplungsinformation zur Verfügung steht, da keine aktualisierten Werte der Gewichtungsvektoren von den Teilnehmerstationen an die Basisstation übertragen werden müssen.

Bei einer Weiterentwicklung dieser Ausgestaltung der Erfindung verfügt die Basisstation über mehr als 2 Antennen, sendet aber nur auf zwei Antennen den gemeinsamen Pilot-Bit-Kanal CPICH. Die Teilnehmerstation kann somit günstige Ausbreitungsmoden oder Gewichtungsvektoren für mehr als diese zwei Antennen nicht bestimmen. Allerdings kann die Basisstation BS anhand des Uplink-Signals 21 die Komponenten der Gewichtungsvektoren W₁, W₂, ... für alle Antennen festlegen.
Die Basisstation BS übermittelt nun den Teil der Gewichtsvektoren, genauer gesagt, diejenigen Komponenten der Gewichtungsvektoren, von zwei bevorzugten Ausbreitungsmoden, welcher sich auf die beiden zum Senden des CPICHs verwendeten Antennen bezieht, an die Teilnehmerstation MS. Anhand dessen liefert dann die Teilnehmerstation, wie bereits oben beschrieben, eine kurzfristige Rückkopplungsinformation 26 an die Basisstation BS zurück, die unter Berücksichtigung der aktuellen Fading-Situation an der Teilnehmerstation entweder den Gewichtungsvektor spezifiziert, der den besten Empfang an der Teilnehmerstation MS ermöglicht, oder, in einer erweiterten Ausführung sogar eine Linearkombination beider Gewichtungsvektoren.. Die Basisstation BS sendet den dedizierten Kanal (Schritt 27) auf allen Antennen gemäß der von der Teilnehmerstation MS getroffenen Auswahl aus den von der Basisstation BS festgelegten Gewichtungsvektoren und wendet für die weiteren Antennen die diesen Antennen zugeordneten Gewichtungsvektorkomponenten an (welche nicht an die Teilnehmerstation übertragen wurden).

Im Gegensatz zum zuvor beschriebenen Ausführungsbeispiel stehen der Teilnehmerstation MS nur die Komponenten der aktuellen Kanalinformation und der Gewichtungsvektoren zur Verfügung, die sich auf die beiden zum Senden des CPICHs verwendeten Antennen beziehen. Das reicht aber zu einer eindeutigen Auswahl eines Gewichtungsvektors aus dem Satz von zwei Gewichtsvektoren aus. Dieses Verfahren hat den Vorteil, dass einerseits nur über zwei Antennen ein Pilotsignal gesendet werden muss und dass andererseits die Teilnehmerstation auch nur zwei solche Pilotsignale empfangen und verarbeiten muss, was eine entsprechende Vereinfachung gegenüber dem Fall bedeutet, dass über alle Antennen ein Pilotsignal gesendet und dann natürlich auch in der Mobilstation empfangen und verarbeitet werden müsste.

Selbstverständlich ist es auch möglich, dass die Basisstation BS zwar Pilot-Signale auf allen Antennen sendet, dass eine Teilnehmerstation aber nur zwei dieser Pilot-Signale, die durch die darin enthaltenen Pilot-Bit-Folgen identifizierbar sind, auswertet, um die kurzfristige Rückkopplungsinformation 26 zu bestimmen. Für die Basisstation BS macht es keinen Unterschied, ob die mit ihr kommunizierenden Teilnehmerstationen MS alle Pilot-Signale oder nur einzelne von diesen auswerten. Sie kann daher unterschiedslos mit beiden Typen von Teilnehmerstationen zusammenarbeiten.

Das vorige Ausführungsbeispiel lässt sich leicht verallgemeinern für eine beliebige Anzahl von Antennen, wobei nur über eine Teilmenge dieser Antennen ein Pilotsignal gesendet wird.

## Patentansprüche

1. Verfahren zum Betreiben eines Mobilfunk-Kommunikationssystems mit wenigstens einer Teilnehmerstation und einer Basisstation mit Antennendiversität, die über einen dedizierten Kanal an die Teilnehmerstation sendet,
**dadurch gekennzeichnet,**
**dass** die Basisstation (BS) an die Teilnehmerstation (MS) eine Information überträgt (6, 15, 23), die einen zum Strahlformen des dedizierten Kanals verwendeten Gewichtungsvektor (W', W) spezifiziert,
wobei die Basisstation den zum Strahlformen des dedizierten Kanals verwendeten Gewichtungsvektor an die Mobilstation signalisiert.

2. Verfahren nach Anspruch 1,
**dadurch gekennzeichnet,**
**dass** die Basisstation (BS) die Information über den verwendeten Gewichtungsvektor (W', W) in diskretisierter Form überträgt.

3. Verfahren nach Anspruch 1 oder 2,
**dadurch gekennzeichnet,**
**dass** die Basisstation (BS) die den Gewichtungsvektor (W', W) spezifizierende Information mit einem Fehlerkorrekturcode codiert überträgt.

4. Verfahren nach einem der vorhergehenden Ansprüche,
**dadurch gekennzeichnet,**
**dass** es zum Schätzen des dedizierten Kanals der Downlink-Übertragung von der Basisstation (BS)an die Teilnehmerstation (MS) eingesetzt wird, wobei die Teilnehmerstation (MS) eine erste Schätzung des dedizierten Kanals aus einer Schätzung eines globalen Kanals (CPICH) anhand des spezifizierten Gewichtungsvektors (W, W') berechnet (7, 16).

5. Verfahren nach Anspruch 4,
**dadurch gekennzeichnet,**
**dass** die Teilnehmerstation (MS) eine ergänzende zweite Schätzung durch Messung am dedizierten Kanal gewinnt (9, 18) und eine abschließende Schätzung durch eine rechnerische Verknüpfung der ersten und der zweiten Schätzung, insbesondere durch Mittelung, berechnet (10, 19).

6. Verfahren nach Anspruch 4 oder 5,
**dadurch gekennzeichnet,**
**dass** die Basisstation (BS) eine Information, die den zu verwendenden Gewichtungsvektor (W) spezifiziert, vorab von der Teilnehmerstation empfängt (4).

7. Verfahren nach Anspruch 6 und Anspruch 2,
**dadurch gekennzeichnet,**
**dass** die Basisstation (BS) die Information von der Teilnehmerstation in diskretisierter Form empfängt, und dass für die Übertragung (6) an die Teilnehmerstation (MS) eine gröbere Diskretisierung verwendet wird als für den Empfang (4) von dieser.

8. Verfahren nach Anspruch 6 und Anspruch 2,
**dadurch gekennzeichnet,**
**dass** die Basisstation (BS) die Information von der Teilnehmerstation in diskretisierter Form empfängt, und dass für die Übertragung (6) an die Teilnehmerstation (MS) eine feinere Diskretisierung verwendet wird als für den Empfang (4) von dieser.

9. Verfahren nach Anspruch 6, 7 oder 8,
**dadurch gekennzeichnet,**
**dass** die Basisstation (BS) eine Korrektur an dem durch die von der Teilnehmerstation empfangene Information spezifizierten Gewichtungsvektor (W) vornimmt (5) und den so erhaltenen korrigierten Gewichtungsvektor (W') zur Strahlformung verwendet, und dass die an die Teilnehmerstation (MS) übertragene (6) Information auf den korrigierten Gewichtungsvektor (W') bezogen ist.

10. Verfahren nach Anspruch 4 oder 5,
**dadurch gekennzeichnet,**
**dass** die Basisstation (BS) den Gewichtungsvektor (W) anhand einer an einem von der Teilnehmerstation kommend empfangenen Uplink-Signal (11) durchgeführten Messung festlegt (12).

11. Verfahren nach Anspruch 10,
**dadurch gekennzeichnet,**
**dass** die Basisstation (BS) eine Korrektur an dem festgelegten Gewichtungsvektor vornimmt und den so erhaltenen korrigierten Gewichtungsvektor zur Strahlformung verwendet und dass die an die Teilnehmerstation (MS) übertragene (15) Information auf den korrigierten Gewichtungsvektor bezogen ist.

12. Verfahren nach Anspruch 9 oder 11,
**dadurch gekennzeichnet,**
**dass** die Korrektur so erfolgt, dass an wenigstens einer zweiten Teilnehmerstation, für die der dedizierte Kanal nicht bestimmt ist, eine Verminderung der Empfangsfeldstärke dieses dedizierten Kanals resultiert.

13. Verfahren nach Anspruch 4 oder 5,
**dadurch gekennzeichnet,**
**dass** die Teilnehmerstation (MS) den von der Basisstation (BS) zu verwendenden Gewichtungsvektor (W) festlegt (3), den so festgelegten Gewichtungsvektor zur Schätzung des dedizierten Kanals heranzieht (7) und an die Basisstation (BS) eine Information überträgt (4), die den von der Basisstation zu verwendenden Gewichtungsvektor (W) spezifiziert.

14. Verfahren nach einem der Ansprüche 6 bis 9 oder Anspruch 13,
**dadurch gekennzeichnet,**
**dass** die Basisstation, wenn sie die den zu verwendenden Gewichtungsvektor spezifizierende Information nicht empfängt, selbsttätig einen Gewichtungsvektor festlegt und eine diesen festgelegten Gewichtungsvektor spezifizierende Information an die Teilnehmerstation überträgt (6, 15).

15. Verfahren nach Anspruch 14,
**dadurch gekennzeichnet**,
die Basisstation (BS) die Festlegung des Gewichtungsvektors (W) unter Gewichtungsvektoren trifft, die zuvor von der Basisstation (BS) verwendet worden sind.

16. Verfahren nach Anspruch 14,
**dadurch gekennzeichnet,**
**dass** die Basisstation (BS) einen vorgegebenen Default-Gewichtungsvektor festlegt.

17. Verfahren nach einem der Ansprüche 1 bis 3,
**dadurch gekennzeichnet,**
**dass** die Basisstation für die Downlink-Strahlformung geeignete Gewichtungsvektoren (W₁, W₂, ...) durch Messungen an einem Uplink-Signal (21) von der Teilnehmerstation (MS) ermittelt und dass die an die Teilnehmerstation (MS) übertragene Information (23) jeweils Vektoren dieses Satzes von ermittelten geeigneten Gewichtungsvekton spezifiziert.

18. Verfahren nach Anspruch 17,
**dadurch gekennzeichnet,**
**dass** die Teilnehmerstation eine kurzfristige Rückkopplungsinformation an die Basisstation liefert, die eine Auswahl oder Linearkombination von Vektoren des Satzes spezifiziert.

19. Verfahren nach Anspruch 17 oder 18,
**dadurch gekennzeichnet,**
**dass** die an die Teilnehmerstation übertragene Information (23) lediglich bestimmte Komponenten der Vektoren spezifiziert.

20. Teilnehmerstation für ein Mobilfunk-Kommunikationssystem, in dem eine Basisstation einen globalen Kanal und einen für eine einzelne Teilnehmerstation bestimmten dedizierten Kanal ausstrahlt,
**dadurch gekennzeichnet,**
**dass** die Teilnehmerstation in der Lage ist, eine einen Gewichtungsvektor spezifizierende Information zu empfangen und eine erste Schätzung des dedizierten Kanals aus einer Schätzung des globalen Kanals unter der Annahme zu berechnen, dass der durch die Information spezifizierte Gewichtungsvektor von der Basisstation für die Strahlformung des dedizierten Kanals verwendet wird.

21. Teilnehmerstation für ein Mobilfunk-Kommunikationssystem,
**dadurch gekennzeichnet,**
**dass** die Teilnehmerstation in der Lage ist, Gewichtungsvektoren spezifizierende Informationen zu empfangen und Rückkopplungsinformation an die Basisstation zu liefern, die eine Auswahl oder Linearkombination unter den spezifizierten Gewichtungsvektoren spezifiziert.

22. Basisstation für ein Mobilfunk-Kommunikationssystem, die eingerichtet ist, einen globalen Kanal und einen für eine einzelne Teilnehmerstation bestimmten dedizierten Kanal mit einem Gewichtungsvektor gewichtet auszustrahlen,
**dadurch gekennzeichnet,**
**dass** sie ferner eingerichtet ist, eine Information auszustrahlen, die den Gewichtungsvektor spezifiziert.

## Claims

1. Method for operating a mobile radio communications system having at least one subscriber station and a base station with antenna diversity which transmits to the subscriber station over a dedicated channel,
**characterised in that**
the base station (BS) transmits to the subscriber station (MS) information (6, 15, 23) specifying a weighting vector (W', W) used for beam forming of the dedicated channel,
wherein the base station signals the weighting vector used for beam forming of the dedicated channel to the mobile station.

2. Method according to claim 1,
**characterised in that**
the base station (BS) transmits the information about the weighting vector (W', W) used in discretised form.

3. Method according to claim 1 or 2,
**characterised in that**
the base station (BS) transmits the information specifying the weighting vector (W', W) encoded with an error correction code.

4. Method according to one of the preceding claims,
**characterised in that**
it is employed for estimating the dedicated channel of the downlink transmission from the base station (BS) to the subscriber station (MS), with the subscriber station (MS) calculating a first estimation of the dedicated channel from an estimation of a global channel (CPICH) by means of the specified weighting vector (W, W') (7, 16).

5. Method according to claim 4,
**characterised in that**
the subscriber station (MS) obtains a supplementary second estimation by means of a measurement performed on the dedicated channel (9, 18) and calculates a final estimation through a mathematical linking of the first and second estimation, in particular by taking a mean (10, 19).

6. Method according to claim 4 or 5,
**characterised in that**
the base station (BS) receives information specifying the weighting vector (W) to be used in advance from the subscriber station (4).

7. Method according to claim 6 and claim 2,
**characterised in that**
the base station (BS) receives the information from the subscriber station in discretised form, and **in that** coarser discretising is employed for transmission (6) to the subscriber station (MS) than for reception (4) from said station.

8. Method according to claim 6 and claim 2,
**characterised in that**
the base station (BS) receives the information from the subscriber station in discretised form, and **in that** finer discretising is employed for transmission (6) to the subscriber station (MS) than for reception (4) from said station.

9. Method according to claim 6, 7 or 8,
**characterised in that**
the base station (BS) performs a corrective adjustment of the weighting vector (W) specified by means of the information received from the subscriber station (5) and employs the corrected weighting vector (W') thus obtained for beam forming, and **in that** the information transmitted (6) to the subscriber station (MS) is referred to the corrected weighting vector (W').

10. Method according to claim 4 or 5,
**characterised in that**
the base station (BS) establishes (12) the weighting vector (W) by means of a measurement performed on a received uplink signal (11) coming from the subscriber station.

11. Method according to claim 10,
**characterised in that**
the base station (BS) performs a corrective adjustment of the established weighting vector and employs the corrected weighting vector thus obtained for beam forming, and **in that** the information transmitted (15) to the subscriber station (MS) is referred to the corrected weighting vector.

12. Method according to claim 9 or 11,
**characterised in that**
the corrective adjustment is performed in such a way that on at least one second subscriber station for which the dedicated channel is not intended the receive field strength of said dedicated channel is reduced.

13. Method according to claim 4 or 5,
**characterised in that**
the subscriber station (MS) establishes (3) the weighting vector (W) to be employed by the base station (BS) and uses the weighting vector established in this way for estimating the dedicated channel (7), and transmits to the base station (BS) information (4) specifying the weighting vector (W) to be employed by the base station.

14. Method according to one of the claims 6 to 9 or claim 13,
**characterised in that**
if it does not receive the information specifying the weighting vector to be used, the base station will establish a weighting vector autonomously and transmit information specifying this established weighting vector to the subscriber station (6, 15).

15. Method according to claim 14,
**characterised in that**
the base station (BS) establishes the weighting vector (W) from among weighting vectors used previously by the base station (BS).

16. Method according to claim 14,
**characterised in that**
the base station (BS) establishes a specified default weighting vector.

17. Method according to one of the claims 1 to 3,
**characterised in that**
the base station determines weighting vectors (W₁, W₂, ...) suitable for downlink beam forming by means of measurements performed on an uplink signal (21) from the subscriber station (MS)
and **in that** the information (23) transmitted to the subscriber station (MS) in each case specifies vectors of this set of determined suitable weighting vectors.

18. Method according to claim 17,
**characterised in that**
the subscriber station supplies short-term feedback information to the base station which specifies a selection or linear combination of vectors of the set.

19. Method according to claim 17 or 18,
**characterised in that**
the information (23) transmitted to the subscriber station only specifies specific components of the vectors.

20. Subscriber station for a mobile radio communications system in which a base station transmits a global channel and a dedicated channel intended for an individual subscriber station,
**characterised in that**
the subscriber station is able to receive information specifying a weighting vector and to calculate a first estimation of the dedicated channel from an estimation of the global channel on the assumption that the weighting vector specified by the information will be used by the base station for beam forming of the dedicated channel.

21. Subscriber station for a mobile radio communications system,
**characterised in that**
the subscriber station is able to receive information specifying weighting vectors and supply feedback information to the base station which specifies a selection or linear combination from among the specified weighting vectors.

22. Base station for a mobile radio communications system which has been set up for transmitting a global channel and a dedicated channel intended for an individual subscriber station weighted with a weighting vector,
**characterised in that**
said station has further been set up for transmitting information specifying the weighting vector.

## Revendications

1. Procédé pour exploiter un système de radiocommunication mobile comprenant au moins une station d'abonné et une station de base avec diversité d'antenne, laquelle émet via un canal dédié vers la station d'abonné, **caractérisé en ce que** la station de base (BS) transmet (6, 15, 23) à la station d'abonné (MS) une information qui spécifie un vecteur de pondération (W', W) utilisé pour la formation de rayon du canal dédié, la station de base signalant à la station mobile le vecteur de pondération utilisé pour la formation de rayon du canal dédié.

2. Procédé selon la revendication 1, **caractérisé en ce que** la station de base (BS) transmet l'information sur le vecteur de pondération utilisé (W', W) sous forme discrétisée.

3. Procédé selon la revendication 1 ou 2, **caractérisé en ce que** la station de base (BS) transmet l'information spécifiant le vecteur de pondération (W', W) de manière codée avec un code de correction d'erreur.

4. Procédé selon l'une des revendications précédentes, **caractérisé en ce qu'**il est mis en oeuvre pour l'estimation du canal dédié de la transmission descendante (downlink) de la station de base (BS) vers la station d'abonné (MS), la station d'abonné (MS) calculant (7, 16) une première estimation du canal dédié à partir d'une estimation d'un canal global (CPICH) à l'aide du vecteur de pondération spécifié (W, W').

5. Procédé selon la revendication 4, **caractérisé en ce que** la station d'abonné (MS) obtient (9, 18) une deuxième estimation complémentaire par mesure sur le canal dédié et calcule (10, 19) une estimation finale par une combinaison, par calcul, des première et deuxième estimations, en particulier par calcul de la moyenne.

6. Procédé selon la revendication 4 ou 5, **caractérisé en ce que** la station de base (BS) reçoit (4) préalablement de la station d'abonné une information qui spécifie le vecteur de pondération (W) à utiliser.

7. Procédé selon la revendication 6 et la revendication 2, **caractérisé en ce que** la station de base (BS) reçoit l'information venant de la station d'abonné sous forme discrétisée et **en ce que**, pour la transmission (6) vers la station d'abonné (MS), on utilise une discrétisation plus grossière que pour la réception (4) de celle-ci.

8. Procédé selon la revendication 6 et la revendication 2, **caractérisé en ce que** la station de base (BS) reçoit l'information venant de la station d'abonné sous forme discrétisée et **en ce que**, pour la transmission (6) vers la station d'abonné (MS), on utilise une discrétisation plus fine que pour la réception (4) de celle-ci.

9. Procédé selon la revendication 6, 7 ou 8, **caractérisé en ce que** la station de base (BS) effectue (5) une correction sur le vecteur de pondération (W) spécifié par l'information reçue de la station d'abonné et utilise le vecteur de pondération corrigé (W') ainsi obtenu pour la formation de rayon et **en ce que** l'information transmise (6) à la station d'abonné (MS) se réfère au vecteur de pondération corrigé (W').

10. Procédé selon la revendication 4 ou 5, **caractérisé en ce que** la station de base (BS) détermine (12) le vecteur de pondération (W) à l'aide d'une mesure effectuée sur un signal montant (uplink) (11) reçu à partir de la station d'abonné.

11. Procédé selon la revendication 10, **caractérisé en ce que** la station de base (BS) effectue une correction sur le vecteur de pondération déterminé et utilise le vecteur de pondération corrigé ainsi obtenu pour la formation de rayon et **en ce que** l'information transmise (15) à la station d'abonné (MS) se réfère au vecteur de pondération corrigé.

12. Procédé selon la revendication 9 ou 11, **caractérisé en ce que** la correction est effectuée de manière telle qu'il en résulte, au moins au niveau d'une deuxième station d'abonné à laquelle le canal dédié n'est pas destiné, une réduction de la force du champ de réception de ce canal dédié.

13. Procédé selon la revendication 4 ou 5, **caractérisé en ce que** la station d'abonné (MS) détermine (3) le vecteur de pondération (W) à utiliser par la station de base (BS), fait appel (7) au vecteur de pondération ainsi déterminé pour l'estimation du canal dédié et transmet (4) à la station de base (BS) une information qui spécifie le vecteur de pondération (W) à utiliser par la station de base.

14. Procédé selon l'une des revendications 6 à 9 ou la revendication 13, **caractérisé en ce que** la station de base, lorsqu'elle ne reçoit pas l'information spécifiant le vecteur de pondération à utiliser, détermine automatiquement un vecteur de pondération et transmet (6, 15) à la station d'abonné une information spécifiant ce vecteur de pondération déterminé.

15. Procédé selon la revendication 14, **caractérisé en ce que** la station de base (BS) détermine le vecteur de pondération (W) parmi les vecteurs de pondération qui ont été utilisés préalablement par la station de base (BS).

16. Procédé selon la revendication 14, **caractérisé en ce que** la station de base (BS) détermine un vecteur de pondération par défaut donné.

17. Procédé selon l'une des revendications 1 à 3, **caractérisé en ce que** la station de base détermine des vecteurs de pondération (W₁, W₂, ...) appropriés pour la formation de rayon dans le sens descendant (downlink) par des mesures sur un signal montant (uplink) (21) de la station d'abonné (MS) et **en ce que** l'information (23) transmise à la station d'abonné (MS) spécifie respectivement des vecteurs de ce jeu de vecteurs de pondération appropriés déterminés.

18. Procédé selon la revendication 17, **caractérisé en ce que** la station d'abonné fournit une information de rétrocouplage à court terme à la station de base qui spécifie une sélection ou une combinaison linéaire de vecteurs du jeu.

19. Procédé selon la revendication 17 ou 18, **caractérisé en ce que** l'information (23) transmise à la station d'abonné spécifie uniquement des composantes déterminées des vecteurs.

20. Station d'abonné pour un système de radiocommunication mobile dans lequel une station de base émet un canal global et un canal dédié destiné à une station d'abonné individuelle, **caractérisée en ce que** la station d'abonné est en mesure de recevoir une information spécifiant un vecteur de pondération et de calculer une première estimation du canal dédié à partir d'une estimation du canal global en supposant que le vecteur de pondération spécifié par l'information sera utilisé par la station de base pour la formation de rayon du canal dédié.

21. Station d'abonné pour un système de radiocommunication mobile, **caractérisée en ce que** la station d'abonné est en mesure de recevoir une information spécifiant des vecteurs de pondération et de fournir une information de rétrocouplage à la station de base qui spécifie une sélection ou combinaison linéaire parmi les vecteurs de pondération spécifiés.

22. Station de base pour un système de radiocommunication mobile, laquelle est aménagée pour émettre, de manière pondérée avec un vecteur de pondération, un canal global et un canal dédié destiné à une station d'abonné individuelle, **caractérisée en ce qu'**elle est en outre aménagée pour émettre une information qui spécifie le vecteur de pondération.
